# EUROPEAN PATENT SPECIFICATION

(11) **EP 1 208 376 B1**
(45) Date of publication and mention of the grant of the patent: **30.11.2005**
(21) Application number: 00961267.2
(22) Date of filing: 01.09.2000
(51) Int. Cl.: G01N 33/483, G01N 21/27

(54) **METHOD AND APPARATUS FOR MEASURING THE EFFECT OF AN EXTERNAL FACTOR ON A CROP PLANT**
VERFAHREN UND VORRICHTUNG ZUR MESSUNG DES EFFEKTS EINER EXTERNEN BEEINFLUSSUNG VON PFLANZEN
PROCEDE ET DISPOSITIF PERMETTANT DE MESURER L'EFFET D'UN FACTEUR EXTERNE SUR UN VEGETAL DE CULTURE

(30) Priority: 01.09.1999 NL 1012948
(43) Date of publication of application: 29.05.2002
(73) Proprietor: ATO B.V., 6700 AA Wageningen (NL)
(72) Inventor: VAN DEN BOOGAARD, Henrica Allegonda Gerarda, 3601 An Maarssen (NL); MENSINK, Maria, Geertruida, Johanna, NL-6706 KC Wageningen (NL); HARBINSON, Jeremy, NL-6707 GR Wageningen (NL)
(74) Representative: van Westenbrugge, Andries
(86) International application number: PCT/NL2000/000616
(87) International publication number: WO 2001/016594

(56) References cited:
- WO-A-97/39350
- DE-A- 3 926 881
- DE-A- 4 427 438
- GB-A- 2 239 311

## Description

The present invention relates to a method and apparatus for measuring the effect of an external factor on a crop plant, according to the preamble of claim 1 or claim 7. The at least one kind of molecule can for example be P700, plastocyanin or cytochrome-f.

It is pointed out that in general the term "crop plants" refers to all species of plants which contain a significant quantity of chlorophyll.

Such a method is known from WO97/39350

GB-A-2 239 311 describes a method for detecting presence of a substance which influences the electron transport chain.

DE-A-44 27 438 describes a method for characterising the photo synthesis system of plants using fluorescence measurements.

Until now the effect of an external factor on a crop plant, such as the application of a herbicide, could not be determined until the consequences for the crop plant became visible, for example by discoloration of the leaf. Often this effect does not take place until a few days after the external factor arises.

In using herbicides, for example, it is important that the herbicides should only end up on the crop plants and/or soil to be treated. In the known methods of treatment, such as spraying from the air or from the ground, it is possible as a result of spraying for herbicides to end up outside the area to be treated - which can be harmful to other vegetation around that area.

Furthermore it is important from the environmental point of view that not too much herbicide is used, but it is also important that not too little herbicide is used, as a result of which the treatment would not be sufficiently effective.

A further advantage of using a smaller amount of herbicide is a higher crop yield. This is because a dosage which is (too) high has a harmful effect on the crop plant itself.

In order to be able to decrease the amount of herbicide used without reducing the efficacy of the treatment it is necessary to be able to measure the efficacy of the herbicide at a time soon after the treatment. The visible effects of the application of a herbicide (leaf discoloration for example) do not occur until several days after treatment. If the effect of a herbicide can be measured faster, a standard (low) dosage can be used, after which further applications only need to be made if the standard dosage was not sufficiently effective.

The object of the present invention is therefore to provide a method for measuring the effect of an external factor, such as the efficacy of a herbicide applied on a crop plant within a few days after treatment with the herbicide, without causing any damage to the crop plant. With the invention it is possible to determine the effect of the external factor on both the weed and on the crop plant.

This object is attained by a method of the kind defined in the preamble, having the characterising features of claim 1 and claim 7.

Photosynthesis is a generic term for a wide range of processes in an organism which have various essential properties in common. Incident radiation in a wavelength range of 400 to 700 nm is absorbed in a further endothermic metabolism - which results in an increase in the free energy of the organism. The absorption mechanism involves the absorption of the incident radiation by a pigment, for example chlorophyll, with the energy absorbed being transferred to a complex of specialized pigments, the so-called reaction centres. The reaction centres are able to use the additional free energy for various photochemical reactions. Depending on the organism concerned, these photochemical reactions are linked to different endothermic processes such as ATP synthesis or the transport through cell membranes of metabolic substrates, waste products or electrolytes.

Two kinds of reaction centres are known in photosynthetic organisms (including all eukaryotic photosynthetic organisms and cyanobacteria), the reaction centre of photosystem I (rcI) and the reaction centre of photosystem II (rcII). In the reaction centres, chlorophyll dimers (P700 in PSI and P680 in PSII) provide the photochemical reactions. These two kinds of reaction centres work in series. Photochemistry in rcII results in the oxidation of water and supplies O₂ and H⁺ and the transfer of electrons to the electron transport chain. Photochemistry in rcI results in the formation of P700⁺ and the reduction of ferredoxin via an electron transport chain which is associated with the P700 in rcI. The P700+ supplied by the photochemistry is reduced by the electrons supplied via the electron transport chain (more generally, reductants), originating from reaction centre rcII. All this therefore results in the transport of electrons from water to ferredoxin and is called photosynthetic electron transport.

The reduced ferredoxin (Fd-) cannot take up any further electrons from reaction centre I and the oxidized P700+ cannot be further oxidized by photochemistry. The oxidation of Fd- to Fd is dependent on the metabolism of the organism (notably the reductive assimilation of carbonic acid, but also other reductive processes). In the normal situation, photosynthetic electron transport and metabolism are co-ordinated by a combination of feedforward activation of the metabolism and feedback blockage of electron transport. In the steady-state situation, the ferredoxin supply and the electron transport chain which is associated with P700 in reaction centre I are relatively oxidized and the P700 can become increasingly oxidized with increasing light intensity because electron acceptors are continuously present.

After a sudden increase in light intensity the equilibrium between electron transport, the regulation thereof and the metabolism are disturbed. The result is a temporary state in which the oxidation of P700 is limited by the excessive reduction of Fd and the electron transport chain of photosystem I. The progressive return to the normal operational equilibrium between electron transport and metabolism results in increasing oxidation of the P700 supply with the passage of time, starting from the increase in light exposure. An important consequence of the complex interaction between metabolism and photosynthetic electron transport is that the latter is very sensitive to disturbances in the environment and the physiological state of the organism. Such a disturbance will affect the kinetics of the redox processes in the regulation of the photosynthetic electron transport chain around P700.

A disturbance can be the effect of the application of a herbicide or the effect of another external factor, such as air pollution or soil contamination. The result of this disturbance is that the crop plant slowly dies - which will not produce visible effects, such as leaf discoloration, until after some time.

By means of the present method the effect of the external factor on the photosynthetic electron transport chain can be determined at a much earlier stage after the appearance thereof. This technique has the advantage that it is non-destructive, non-invasive and quick to perform, and the effect of the external factor can already be measured when no visual evidence is yet present.

It should be pointed out that a method and apparatus for determining a quality parameter of a crop plant are already known from Netherlands Patent Application 1002870 in the name of the applicant. This is done, however, by directly determining the relaxation parameter of the redox reaction of the P-700 reaction cores of the PSI photosystem of a crop plant. This relaxation parameter is deduced for example by measuring the absorption of the P-700 reaction cores in the crop plant, for example at a particular, specific wavelength (820 nm) after very brief light exposure. This requires accurate measurement methods, as the changes in absorption are very small. In this case the relaxation parameter is an indication of the quality of the crop plant.

The quality parameter which can be determined with the known method might give an indication of how much a crop plant is affected by an external factor or a herbicide applied. The relationship between the measured quality of the crop plant and the effect of the external factor is not unambiguous, however. Furthermore, the known method has the disadvantage that only very small changes in absorption are measured, as a result of which the measurements are very sensitive to noise and interference.

The embodiment of claim 1 can be used with advantage when the effect on the crop plant is caused by air pollution or soil contamination or in the case of application of a herbicide which interferes with the metabolism of the crop plant, such as glyphosate, or of a herbicide which interferes with the normal relationship between the photosynthetic electron transport and the metabolism of the crop plant, such as paraquat. This method can also be used for determination of the efficacy of herbicides which directly interfere with photosynthesis. By increasing the light exposure the equilibrium between electron transport and metabolism is disturbed. By measuring the absorption at least during the light exposure with the second light exposure level, it can be deduced from the changes in absorption how quickly the supply of molecules is oxidized until a new steady-state condition arises. The change in absorption is preferably measured for a period between 2 and 10 minutes, for example 4 minutes. In the case of most crop plants this is sufficient to attain a new steady-state condition in which the quantity of oxidized molecules does not further increase or decrease. The measured changes in absorption then provide sufficient information about the oxidation rate. By also in part measuring the absorption during light exposure with the first light exposure level, a base level of the absorption at the first light exposure level can be established.

As an alternative way of deducing the absolute oxidation rate from the measured changes in absorption, the relative oxidation rate can also be determined. To this end it is necessary to determine the total quantity of molecules present of the at least one kind. This can be done by means of an absorption measurement during the oxidation of all the molecules present by a saturating light exposure. The redox kinetics parameter is then the increase in oxidized molecules relative to the total quantity of the molecules of the at least one kind, and can be expressed as a percentage per unit of time. This redox kinetics parameter makes a simpler comparison possible with a comparison value.

This embodiment can be simplified even further by measuring the absorption not continuously during the light exposure with the second light exposure level but only at a particular point in time after the transition from the first light exposure level to the second light exposure level. The redox kinetics parameter is then the quantity of oxidized molecules at that point in time, deduced from the absorption measurement, relative to the total quantity of the molecules of the at least one kind, and can be expressed as a percentage.

In the case of application of herbicides which directly affect the photosynthesis process of the crop plant, such as DCMU or metribuzin, it is of advantage to look not at the oxidation kinetics but at the reduction kinetics. To this end the operation of bringing into the oxidized state takes place by increasing the light exposure of the crop plant during a first light exposure period from a first light exposure level to a second light exposure level as described in claim 7. Relative to the aforesaid method whereby the oxidation kinetics are determined, this light exposure period can be much shorter, in the order of magnitude of 1 to 5 milliseconds.

Some of the molecules of the at least one kind are oxidized by the brief light exposure with the second light exposure level. When the light exposure returns to the first light exposure level, the oxidized molecules will be reduced by the photosynthesis processes and other processes in the crop plant. The photosynthesis process is characterized by a higher reduction rate than the other processes. Characteristic reduction kinetics parameters, such as the reduction rate, can subsequently be deduced from the changes in absorption measured at least during and after the first light exposure period, so that it can be deduced whether the herbicide applied has an effect on the blockage of the electron transport chain of the photosynthesis process of the crop plant. In a first light exposure period of, for example, 1 to 5 milliseconds it is sufficient to measure the absorption during 30 to 100 milliseconds, for example 60 milliseconds, in order to obtain sufficient information.

Herbicides have the effect that photosynthesis is blocked in a part of the leaf where the absorption is measured. As a result of this, not all the oxidized molecules will be reduced equally quickly. This will be apparent in the changes in absorption, in that the measured absorption does not quickly return to the level of before the light exposure with the second light exposure level. In a completely affected leaf, the oxidized molecules will reduce only very slowly and, after the increase in the absorption as a result of a flash of light during the measurement period, the absorption will scarcely change after the flash of light. In this case the redox kinetics parameter can be the degree of reduction of oxidized molecules. This can also be expressed as the percentage of molecules that are still oxidized at the end of the measurement period, relative to the initially oxidized molecules.

The comparisons of the at least one redox kinetics parameter for determination of the efficacy of the herbicide applied can take place in different ways. The at least one comparison value can be a theoretical or empirically determined expected value. This cannot take place until sufficient knowledge is available about the theoretical behaviour of a crop plant or until sufficient measurements have been made on a particular crop plant in order to form an empirical expectation model. The redox kinetics parameter obtained with the method is more preferably compared with a value measured in the same crop plant before the external factor, such as application of the herbicide, arises. This way of comparing excludes all types of variations in the measurement as a result of external influences. More preferably, a measurement is performed a number of times by means of the present method, as a result of which it is possible to follow the progressive effect of the external factor or the application of a herbicide. The measurement can take place every 24 hours, for example, or, if the crop plant is being grown in other light-darkness cycles, after each transition from darkness to light.

A second aspect of the present invention concerns a measurement apparatus according to claim 15. The methods according to the present invention are to be applied with this apparatus.

The present method and measurement system may be used to indicate the damage the herbicide has caused to the leaves of a weed shortly after application of the herbicide. Using the measurement system, more certainty can be obtained about herbicide application and it can be used as a tool in reducing the application of. The benefits of using the above mentioned method and meter are a reduced use of herbicides, and besides that a higher crop yield, since reduction of the herbicide dosage also leads to less negative effects on the crop.

The present invention will now be explained with the aid of preferred embodiments of the method according to the present invention and a apparatus which is suitable for carrying out the method, with reference to the drawings, in which:
Fig. 1 shows a schematic diagram of a preferred embodiment of a measurement apparatus for measuring the efficacy of a herbicide on a crop plant;
Fig. 2 is a graph of changes in absorption over time, measured in accordance with the present invention, for a tomato plant treated with glyphosate;
Fig. 3 shows the results of the determination of the relative oxidation rate of P700 molecules after treatment of a tomato plant with glyphosate;
Figs. 4a to 4c each show changes in absorption, measured on leaves of Chenopodium album, with different effects of the application of the photosynthetic herbicide metribuzin; and
Figs. 5a to 5c show the percentage damage to leaves of Chenopodium album after treatment with different concentrations of metribuzin.

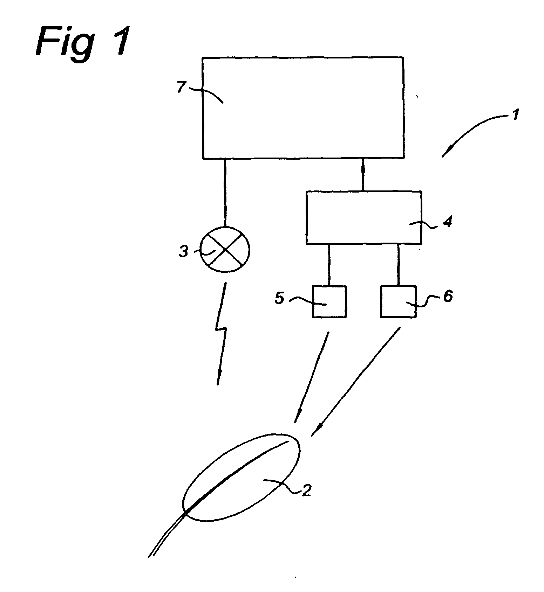

Fig. 1 shows a schematic diagram of a preferred embodiment of a measurement apparatus 1 for measuring the effect of an external factor on a crop plant. A leaf 2 of the crop plant is shown schematically. The crop plant can be exposed to ambient light which originates from daylight or from artificial light with a particular wavelength range (400-700 nm, for example). In Fig. 1 the means for light exposure of the crop plant, which are controlled by the processing means 7, are indicated with the reference number 3. The measurement apparatus 1 further includes means of absorption measurement 4, to which a light source 5 with a particular wavelength and a light detector 6 are connected. The light detector 6 is preferably substantially sensitive to the light emitted by the light source 5 with a particular wavelength. The light source 5 and the light detector 6 are targeted at one or more leaves 2 of a crop plant, in such a way that the relative changes in absorption of the light by particular molecules in the leaf 2 can be measured with the means of absorption measurement. The wavelength of the measurement light is determined by the absorption characteristics of the kind of molecules for which it is desired to measure the changes in the redox state. For the case of measurement of the absorption by oxidized P700 molecules (P700⁺) the wavelength is preferably 820 nm. The method and measurement apparatus 1 can also be applied, however, for the measurement of absorption by other molecules which play a role in the redox reactions and the electron transport system of photosynthetic processes of the crop plant. The means of absorption measurement 4 are connected to the processing means 7.

The processing means 7 are designed to control the means for light exposure 3 and the means of absorption measurement 4, and to store, process and present the results obtained from the means of absorption measurement 4. The measurement apparatus 1 is suitable for carrying out the method according to the present invention, with the processing means 7 being arranged to carry out specific steps of the present method.

Crop plants, such as plants, flowers, but also vegetables and fruit, make use of photosynthesis processes in order to take from their environment the energy which they need for their continued existence. It is pointed out that in what follows the term "crop plants" refers to both crop plants in the field and products harvested therefrom, as well as weeds. In general the term "crop plants" refers to all kinds of plants which contain a significant amount of chlorophyll. During the above-mentioned photosynthesis process, carbon dioxide is converted into hydrocarbon compounds with the aid of sunlight, also releasing oxygen. Every crop plant is equipped for this purpose with a photosynthesis system of its own, which is located in the green parts of the crop plant, such as the leaves, the stem or the fruits. Such a photosynthesis system has inter alia a light-capturing system which comprises two important pigment-protein complexes, namely photosystems I and II (PSI and PSII, respectively), which are equipped with photon transfer components. With the aid of its light-capturing system a crop plant absorbs sunlight. This sunlight is responsible inter alia for a chain of successive oxidation/reduction reactions of components of the photosynthesis system, in which the solar energy captured is transported by the photon transfer components mainly to PSI and to PSII. The transported solar energy is then used to produce a photochemical reaction in the crop plant in which electrons are transported and oxygen is released.
On the donor side of PSI there is a triplet of molecules linked in series, namely P-700, plastocyanin and cytochrome-f. If light is absorbed via the PSI system, P-700 is oxidized to P-700⁺. The state of the P700 molecule can be determined by measurements of the absorption at a specific wavelength (preferably 820 nm).

The direct effect of application of a herbicide which affects the metabolism of the crop plant, such as glyphosate, is blockage of the synthesis of certain amino acids. This will block protein synthesis and thus affect a whole series of plant processes. One of the most important plant processes is the photosynthesis process: assimilation products are produced from carbon dioxide and water, using light energy. Since this process is integrated in and regulated by the plant metabolism, and is also closely related to the quantity of amino acids and proteins, the application of glyphosate affects photosynthesis.

There are also other herbicides which have effects on the crop plant at another point in the photosynthesis processes. A herbicide such as paraquat affects the relationship between electron transport and the metabolism of the crop plant, and herbicides such as DCMU and metribuzin influence the photosynthesis process directly.

After a sudden increase in light intensity the equilibrium in a crop plant between electron transport, the regulation thereof and the metabolism is disturbed. The result is a temporary state in which the degree of oxidation of P700 is limited by the excessive reduction of Fd and the electron transport chain of photosystem I. The progressive return to the normal operational equilibrium between electron transport and metabolism results in increasing oxidation of the P700 supply with the passage of time, starting from the increase in light exposure. An important consequence of the complex interaction between metabolism and photosynthetic electron transport is that the latter is very sensitive to disturbances in the environment and the physiological state of the organism. Such a disturbance will affect the kinetics of the redox processes in the regulation of the photosynthetic electron transport chain around P700.

A disturbance can be the effect of the application of a herbicide. The result of this disturbance is that the crop plant slowly dies - which after some time will produce visible effects, such as leaf discoloration.

An example of a herbicide which is applied in a wide area in order to destroy weeds is the glyphosate mentioned earlier. This herbicide is non-selective, i.e. all plants, including grasses, broad-leaved plants and woody plants, are destroyed by it. Glyphosate works by blocking a biochemical pathway, the shikimic acid pathway. The enzyme EPSPS (enolpyrovylshikimate phosphate synthase) is blocked - which in turn blocks the formation of aromatic amino acids. Glyphosate is taken up in particular by the leaves and is transported through the whole plant, as a result of which all parts are destroyed. In low dosages it acts as a growth regulator. As a result of the application of glyphosate as a herbicide, parts above ground will eventually turn brown and the roots will deteriorate.

Glyphosate-resistant crop plants are being developed to resist exposure to glyphosate. This makes it possible to apply the herbicide after the crop plant has emerged, with weeds but not the glyphosate-resistant crop plants being killed. An example of a glyphosate-resistant crop plant is the Roundup Ready soya bean. Roundup is an example of a glyphosate which is marketed by Monsanto. Other trade names used for glyphosate herbicides are Rodeo, Accord and Vision. The Roundup Ready soya beans are genetically manipulated soya beans with a single added protein, a Roundup-resistant enzyme (CP4-EPSPS). Such a crop plant makes two different EPSPS's, the crop plant's own EPSPS, which is blocked by Roundup, and a bacterial CP4-EPSPS, which is not blocked by Roundup. Because of the presence of the CP4-EPSPS enzyme the crop plant can continue to make amino acids in the EPSPS pathway, even if the Roundup herbicide is present. Because the CP4-EPSPS enzyme is present everywhere in the crop plant, the latter is not affected at all by the herbicide.

Glyphosate herbicides are used to regulate the growth of a wide variety of annual, biennial and permanent grasses, broad-leaved weeds and woody bushes. It is used in orchards, vineyards, plantations and many fruit crop plants (coffee, tea, bananas); for development of a crop plant when weeds come up (soya beans, cereals, vegetables and cotton); on non-crop land (verges); forestry; gardening and horticulture. In addition, glyphosate is used for growth regulation in peanuts and sugarcane, in order to regulate growth and accelerate the ripening of fruit.

Although glyphosate per se is not very poisonous to man and animals, products which contain glyphosate often contain other substances which may be poisonous, such as the surfactant polyoxyethyleneamine (POEA). Unbound glyphosate is broken down by bacteria and residues would therefore not be very harmful. It has recently been shown, however, that glyphosate can easily be washed out of certain kinds of soil and can therefore get into surface water. Furthermore, the spread of glyphosate, albeit unintentional, can cause damage to the wild flora and trees in the vicinity of the area of application. Spraying an area with glyphosate from the air can cause glyphosate to finish up between 400 and 800 metres away. Spraying from the ground can still be harmful to sensitive plants within 100 metres of the area. It is thought that glyphosate also affects rows of trees around fields, resulting in dying-off and reduction of winter hardiness and resistance to fungi. For reasons of health and environmental considerations, therefore, there is a need to restrict the use of the herbicide.

The efficacy of application of herbicides is highly dependent on unpredictable factors, such as weather factors, and so high doses of herbicides are often applied in order to make sure that they work effectively. Cold or cloudy weather can reduce the activity or uptake of glyphosate, and heavy rainfall immediately after application can wash the chemical off the foliage and necessitate re-application.

It is possible to measure the effect of glyphosate, or of a herbicide in general, on a crop plant by means of an absorption measurement after an increase in the ambient light exposure with the measurement apparatus 1 described above with reference to Fig. 1. This technique has the advantage that it is non-destructive, non-invasive and quick to perform, and the efficacy of the herbicide applied can already be measured when no visual evidence is yet present.

The measurement apparatus 1 measures the oxidation state of the molecule P700 or the oxidation state of other components of the photosynthetic electron transport system which are in equilibrium therewith (plastocyanin or cytochrome-f, for example). With the measurement apparatus the oxidation state is determined by means of spectrophotometric techniques (absorption measurement) but the oxidation state can also be measured by electron spin resonance.

The most practical wavelength range for direct measurement of the oxidation state of P700 molecules with the means of absorption measurement 4 is between 800 and 900 nm, and is preferably 820 nm. There are also other wavelengths which can be used for this purpose, however. P700 molecules and plastocyanin show an increase in absorption after oxidation around this wavelength.

The means for light exposure 3 give a stepwise increase in the ambient light exposure of the crop plant. The required change in intensity depends on the type of crop plant and its history and must be sufficient to considerably disturb the equilibrium between electron transport and the demand of the metabolism. The method is preferably applied to crop plants which have been kept in almost complete darkness for a certain time (5 minutes for example) or which have been kept in an environment with a low light intensity.

The means of absorption measurement 4, 5, 6 are switched on before the intensity of the ambient light is increased, in order to determine a clear zero level of the measurement. A period of 10 seconds is usually sufficient for this purpose.

After increasing the intensity of the ambient light, the absorption is measured with the means of absorption measurement 4 and the results are sent to the processing means 7 for storage, processing and presentation.

According to the method of the present invention, a particular redox kinetics parameter is compared with a comparison value. The processing means 7 of the measurement apparatus 1 are preferably set up to make this comparison. The comparison of the at least one redox kinetics parameter for determination of the efficacy of the herbicide applied can take place in different ways. The at least one comparison value can be a theoretical or empirically determined expected value. This cannot take place until sufficient knowledge is available about the theoretical behaviour of a crop plant or until sufficient measurements have been made on a particular crop plant in order to form an empirical expectation model. The redox kinetics parameter obtained with the method and measurement apparatus 1 can also be compared with a value measured in the same crop plant before application of the herbicide. This way of comparing excludes all types of variations in the measurement as a result of external influences. In addition, a measurement can be performed a number of times by means of the present method and measurement apparatus 1, as a result of which it is possible to follow the progressive effect of the application of a herbicide. The measurement can take place every 24 hours, for example, or, if the crop plant is being grown in other light-darkness cycles, after each transition from darkness to light.

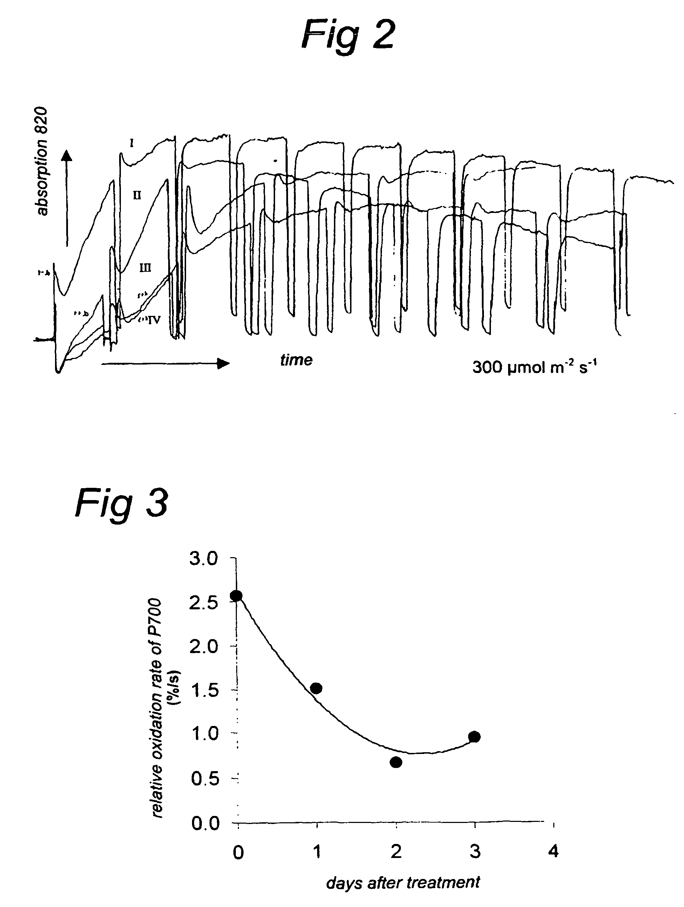

Fig. 2 shows a graph of changes in absorption over time, measured in accordance with the present invention, for a tomato plant treated with glyphosate. The time is represented on the horizontal axis, and the absorption of the light with a wavelength of 820 nm, which is directly related to the quantity of oxidized P700 molecules present in the area of measurement, is represented along the vertical axis. The changes in absorption were measured immediately after the change in the ambient light from a low level to a high level, with the high level having an intensity of 300 µmol m⁻²s⁻¹. Curve I gives the changes in absorption on the day before treatment with glyphosate. Curve II gives the changes in absorption on the first day after treatment of the tomato plant with glyphosate. Curve III gives the changes in absorption measured in the same tomato plant at the start of the second day and Curve IV gives the changes in absorption at the start of the third day.

The processing means 7 are equipped for comparing the three curves. From this it can be seen, for example, that the gradient of the curves is less steep on the second and third day after treatment with glyphosate. The increase in absorption by the P-700 reaction cores of ambient light for the photosynthesis processes in the tomato plant thus takes place less quickly on the second and third day - which indicates a lower oxidation rate. At this intensity of ambient light it can also be seen that the asymptotically obtained value of the absorption is markedly lower on the second and third day than on the first day.

The processing means 7 are further arranged to determine the oxidation rate of P700 molecules from the changes in absorption. In a further embodiment the processing means 7 are also arranged to determine the relative rate of increase of oxidized P700 molecules (P700⁺). To this end the total supply of P700 molecules in the area of measurement of the crop plant is determined, after which the relative oxidation rate can be expressed as the increase in P700⁺ relative to the total supply of P700. The method can then be further simplified by measuring the quantity of P700⁺ at a particular time after the increase in the light exposure level, instead of measuring the variation over time.

The total quantity of P700 can be determined by oxidizing all the P700 molecules in the area of measurement with a saturating light exposure. This can be done, for example, by exposing the crop plant with the means for light exposure 3 to red light (720 nm) in combination with a flash of light of high intensity. The total quantity of P700 can then be determined by adding up the change in absorption which occurs after the transition from darkness to light and the change in absorption which follows the flash of light. The processing means 7 have been set up in an embodiment to coordinate the means for light exposure 3 and means of absorption measurement 4, and to process the measurement results.

Fig. 3 shows the results of determination of the relative oxidation rate of P700 molecules after treatment of a tomato plant with glyphosate. The graph clearly shows that the relative oxidation rate is greatly reduced after application of glyphosate. In the untreated crop plant (day 0) the relative oxidation rate was 2.5%/s and after 2 days this had decreased to 1%/s.

By means of this method, therefore, the oxidation rate of P700 molecules can be deduced from the changes in absorption, and the efficacy of the treatment of the tomato plant with glyphosate can be determined from the comparison of the changes in absorption measured at different points in time after application of the herbicide.

This method, in which the oxidation rate of P700 is determined as the characteristic redox kinetics parameter, can also be used after application of other herbicides which, just like glyphosate, interfere with the metabolism of the crop plant, and herbicides which interfere with the normal relationship between the photosynthetic electron transport and the metabolism of the crop plant, such as paraquat. The technique can also be used for determining the efficacy of photosynthesis herbicides.

A further redox kinetics parameter which can be determined with the present invention, in order to determine the efficacy of application of a herbicide, is connected with the reduction of molecules which are located on the donor side of the electron transport system of the crop plant, such as P700, plastocyanin and cytochrome-f. This method is preferably applied to photosynthetic herbicides, such as DCMU or metribuzin.

For the determination of the reduction kinetics of these molecules the ambient light is increased with the aid of the means for light exposure 3, not in steps but in pulses during a first light exposure period. Photosynthetic herbicides have a direct effect on the photosynthesis process of a crop plant. When the light exposure returns to the first light exposure level, the oxidized molecules will be reduced by the photosynthesis processes and other processes in the crop plant. The photosynthesis process is characterized by a higher reduction rate than the other processes. Characteristic reduction kinetics parameters, such as the reduction rate, can subsequently be deduced from the changes in absorption measured at least during and after the first light exposure period, so that it can be deduced whether the herbicide applied has an effect on the blockage of the electron transport chain of the photosynthesis process of the crop plant.

The herbicides have the effect that photosynthesis is blocked in a part of the leaf where the absorption is measured. As a result of this, not all the oxidized molecules will be reduced equally quickly. This will be apparent in the changes in absorption, in that the measured absorption does not quickly return to the level of before the light exposure with the second light exposure level. In a completely affected leaf the oxidized molecules will reduce only very slowly and the absorption will scarcely change during the measurement period. In this case the redox kinetics parameter can be the degree of reduction of oxidized molecules. This can also be expressed as the percentage of molecules that are still oxidized at the end of the measurement period, relative to the initially oxidized molecules.

For most crop plants a light exposure with a second light exposure level for 1 to 5 milliseconds is sufficient to oxidize some of the molecules. The means of absorption measurement 4 control the light source 5 in order to be able to measure the absorption during the light exposure and after the light exposure with the aid of the light detector 6, during a measurement period of between 30 and 100 milliseconds, for example 60 milliseconds. Measurements are preferably also made for a certain time before the light exposure with the second light exposure level, in order to be able to determine an unambiguous base level of the absorption measurement. Just as in the case of the method described earlier, a wavelength of 820 nm is preferably used for the measurement of absorption by oxidized P700 molecules.

During the light exposure pulse the change in absorption by oxidized P700 molecules, for example, is measured, and after the light exposure pulse the reduction rate or the degree of reduction can be determined.

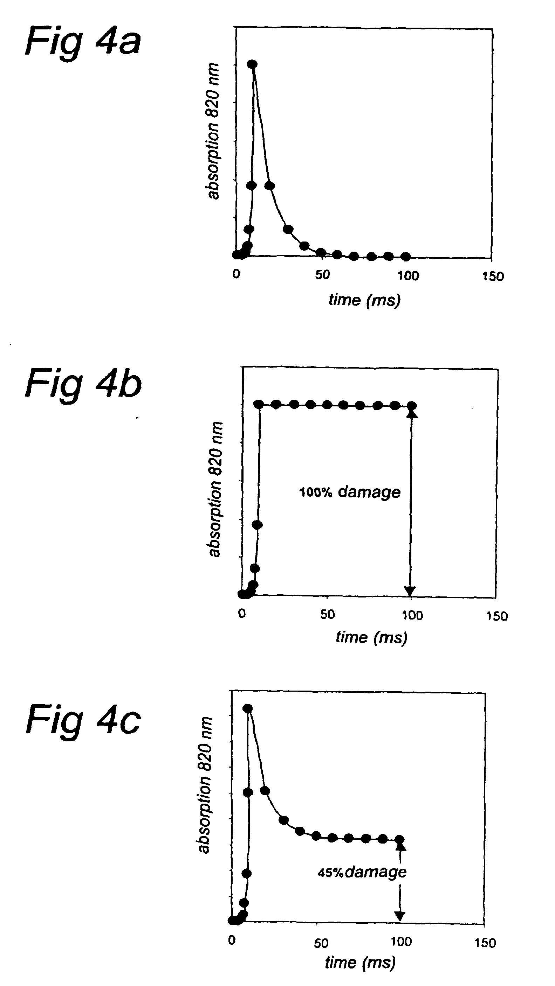

Figs. 4a to 4c each show a change in absorption with different effects of the application of the photosynthetic herbicide metribuzin. Fig. 4a shows the situation where no herbicide effect is visible. All the oxidized P700 molecules are quickly reduced again after the brief light exposure pulse. After approximately 60 milliseconds the absorption level is the same again as before the light exposure pulse. The leaf thus shows no damage. Fig. 4b shows the graph of a measurement on a leaf which has been totally affected by a herbicide applied. The absorption level after the light exposure pulse remains virtually the same - which indicates 100% damage. An intermediate case is shown in Fig. 4c. Part of the leaf is evidently affected by the herbicide, and in that part there will be virtually no reduction of the oxidized P700 molecules. In the unaffected part, reduction does take place. In the new steady-state situation, 45% of the oxidized P700 molecules have not been reduced.

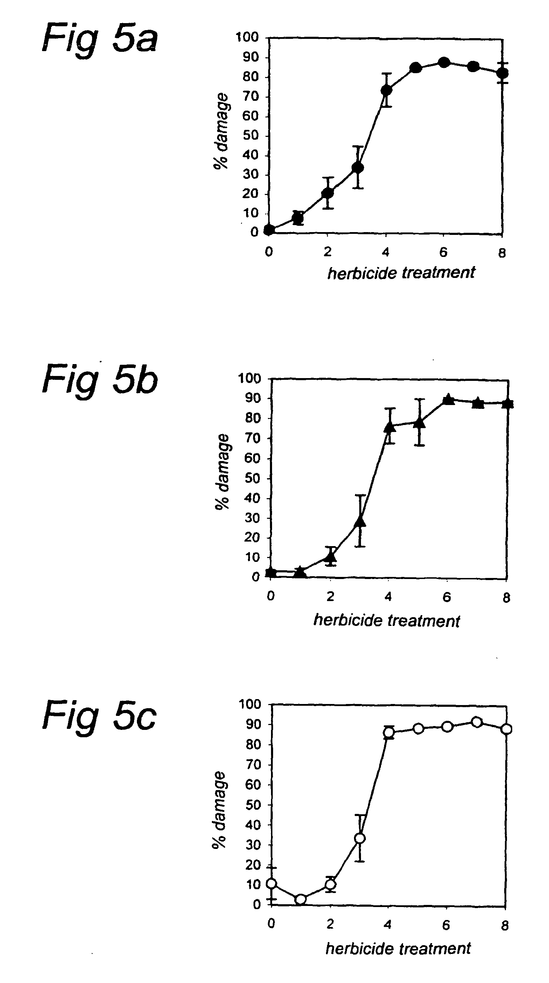

Figs. 5a to 5c show the percentage damage to leaves of Chenopodium album after treatment with different concentrations of metribuzin. For each treatment with a different concentration 2 leaves of 4 individual plants were measured. The different concentrations are marked off along the horizontal axis. The following concentrations were used: 1 = 0 kg/ha; 2 = 0.008 kg/ha; 3 = 0.016 kg/ha; 4 = 0.03 kg/ha; 5 = 0.06 kg/ha; 6 = 0.125 kg/ha; 7 = 0.25 kg/ha; 8 = 0.5 kg/ha; 9 = 1 kg/ha. Fig. 5a shows the percentage damage 1 day after application of the herbicide, Fig. 5b 2 days after and Fig. 5c 3 days after. It can be seen from the graphs that there is a clear relationship between the concentration of the treatment with the herbicide and the percentage damage measured. It can be seen that it is already possible after one day to estimate whether the treatment is sufficiently effective. As a result it becomes possible to treat a particular area with as low concentrations as possible, and to determine already after one day whether a further treatment is necessary. As a result it can be sufficient to treat a particular area with as little herbicide as possible - which is favourable for limiting harmful environmental effects.

With the method and apparatus as described above it is thus possible already to assess the efficacy of the treatment a short time after the treatment of a crop plant or field with a herbicide, at a time when there is not yet any visual evidence of the efficacy of the herbicide, such as leaf discoloration.

## Claims

1. Method of measuring the effect of an external factor on a crop plant, comprising the steps of
bringing at least one kind of a number of kinds of molecules situated on the donor side of the electron transport system of the crop plant into an oxidized state, the operation of bringing into the oxidized state takes place after a first period after the external factor arises;
measuring the absorption by the oxidized molecules in the crop plant at a wavelength determined by the oxidized molecules;
deducing at least one redox kinetics parameter of the at least one kind of molecules from the absorption measurement; and
comparing the at least one redox kinetics parameter with at least one comparison value, in order to determine the effect of the external factor, wherein the operation of bringing into the oxidized state takes place by increasing the light exposure of the crop plant from a first light exposure level to a second light exposure level;
the absorption measurement takes place at least during the light exposure with the second light exposure level, and
the at least one redox kinetics parameter is the oxidation change over time of the at least one kind of molecules.

2. Method according to Claim 1, **characterized in that** the effect of the external factor is caused by air pollution, soil contamination or the application of a herbicide, where the herbicide is chosen from the group consisting of a herbicide which interferes with the metabolism of the crop plant, a herbicide which interferes with the normal relationship between the photosynthetic electron transport and the metabolism of the crop plant, or a herbicide which has a direct effect on photosynthesis.

3. Method according to Claim 1 or 2, **characterized in that** the light exposure with the second light exposure level takes place for 2 to 10 minutes, for example 4 minutes.

4. Method according to one of Claims 1 to 3, **characterized in that** the measurement of the absorption also takes place in part at the first light exposure level, in order to be able to determine a base level of the absorption at the first light exposure level.

5. Method according to one of Claims 1 to 4, **characterized in that** the method comprises the further step of
determining the total quantity of the at least one kind of molecules by means of the absorption measurement during the oxidation of all the molecules present by a saturating light exposure;
and **in that**
the redox kinetics parameter is deduced from the increase in oxidized molecules relative to the total quantity of the at least one kind of molecules.

6. Method according to Claim 5, **characterized in that**
the absorption measurement takes place at a particular point in time after the transition from the first light exposure level to the second light exposure level, and
the redox kinetics parameter is the quantity of oxidized molecules, deduced from the absorption measurement, relative to the total quantity of the at least one kind of molecules.

7. Method of measuring the effect of an external factor on a crop plant, comprising the steps of
bringing at least one kind of a number of kinds of molecules situated on the donor side of the electron transport system of the crop plant into an oxidized state, the operation of bringing into the oxidized state takes place after a first period after the external factor arises;
measuring the absorption by the oxidized molecules in the crop plant at a wavelength determined by the oxidized molecules;
deducing at least one redox kinetics parameter of the at least one kind of molecules from the absorption measurement; and
comparing the at least one redox kinetics parameter with at least one comparison value, in order to determine the effect of the external factor wherein the operation of bringing into the oxidized state takes place by increasing the light exposure of the crop plant during a first light exposure period from a first light exposure level to a second light exposure level
and the absorption measurement takes place at least during and after the first light exposure period, and the at least one redox kinetics parameter is the change in reduction over time and/or the degree of reduction of the at least one kind of molecules.

8. Method according to Claim 7, **characterized in that** the effect of the external factor is caused by air pollution, soil contamination or the application of a herbicide, with the herbicide being a photosynthetic herbicide.

9. Method according to Claim 7 or 8, **characterized in that** the first light exposure period is between 1 and 5 milliseconds and that the absorption measurement takes place for 30 to 100 milliseconds.

10. Method according to one of Claims 1 to 9, **characterized in that** the at least one comparison value is a theoretical expected value.

11. Method according to one of Claims 1 to 9, **characterized in that** the at least one comparison value is an empirically determined expected value.

12. Method according to one of Claims 1 to 9, **characterized in that** the at least one comparison value is a value measured in the crop plant before the external factor arises.

13. Method according to one of Claims 1 to 9, **characterized in that** the at least one comparison value is a value measured at another point in time after the external factor arises.

14. Method according to one of the preceding claims, **characterized in that** the first period is 24 hours.

15. Measurement apparatus for measuring the effect of an external factor on a particular crop plant, where the measurement apparatus is provided with:
oxidizing means which are designed to bring at least one kind of a number of kinds of molecules that are situated on the donor side of the electron transport system of the crop plant, into an oxidized state;
means of absorption measurement which are arranged to measure the absorption by the oxidized molecules in the crop plant at a wavelength determined by the oxidized molecules,
in which the oxidizing means are further arranged to bring the molecules of the at least one kind into an oxidized state after a first period after the external factor arises, and that the apparatus further includes processing means which are arranged to deduce from the absorption measurement at least one redox kinetics parameter of the at least one kind of molecules and to compare the at least one redox kinetics parameter with at least one comparison value in order to determine the effect of the external factor,
wherein the oxidizing means are arranged to bring the at least one kind, of a number of kinds of molecules that are situated on the donor side of the electron transport system of the crop plant, into an oxidized state by increasing a light exposure of the crop plant from a first light exposure level to a second light exposure level,
the means of absorption measurement are arranged to measure the absorption at least during the light exposure with the second light exposure level, and
the processing means are arranged to determine the at least one redox kinetics parameter, in which the at least one redox kinetics parameter is the oxidation change over time of the at least one kind of molecules.

## Patentansprüche

1. Verfahren zum Messen der Wirkung eines externen Faktors auf eine Nutzpflanze, umfassend die Schritte:
Überführen von mindestens einer Art von verschiedenen Arten von Molekülen, die auf der Donorseite des Elektronentransportsystems der Nutzpflanze liegen, in einen oxidierten Zustand, wobei der Vorgang des Überführens in den oxidierten Zustand nach einem ersten Zeitraum, nachdem der externe Faktor erscheint, stattfindet;
Messen der Absorption durch die oxidierten Moleküle in der Nutzpflanze bei einer Wellenlänge, die durch die oxidierten Moleküle bestimmt wird;
Ableiten von mindestens einem Redoxkinetik-Parameter der mindestens einen Art von Molekülen aus der Absorptionsmessung; und
Vergleichen des mindestens einen Redoxkinetik-Parameters mit mindestens einem Vergleichswert, um die Wirkung des externen Faktors zu bestimmen, wobei
der Vorgang des Überführens in den oxidierten Zustand stattfindet, indem die Lichtexposition der Nutzpflanze von einem ersten Lichtexpositions-Niveau auf ein zweites Lichtexpositions-Niveau gesteigert wird;
die Absorptionsmessung mindestens während der Lichtexposition mit dem zweiten Lichtexpositions-Niveau stattfindet, und
der mindestens eine Redoxkinetik-Parameter die Oxidationsänderung über der Zeit der mindestens einen Art von Molekülen ist.

2. Verfahren nach Anspruch 1, **dadurch gekennzeichnet, dass** die Wirkung des externen Faktors durch Luftverschmutzung, Verunreinigung des Bodens oder die Anwendung eines Herbizids verursacht wird, wobei das Herbizid aus der Gruppe ausgewählt ist, die aus einem Herbizid, das in den Stoffwechsel der Nutzpflanze eingreift, einem Herbizid, das die normale Beziehung zwischen dem photosynthetischen Elektronentransport und dem Stoffwechsel der Nutzpflanze beeinträchtigt, oder einem Herbizid, das eine direkte Wirkung auf die Photosynthese hat, besteht.

3. Verfahren nach Anspruch 1 oder 2, **dadurch gekennzeichnet, dass** die Lichtexposition mit dem zweiten Lichtexpositions-Niveau zwei bis zehn Minuten, z.B. vier Minuten, stattfindet.

4. Verfahren nach einem der Ansprüche 1 bis 3, **dadurch gekennzeichnet, dass** die Messung der Absorption auch zum Teil bei dem ersten Lichtexpositions-Niveau stattfindet, um in der Lage zu sein, ein Basisniveau der Absorption beim ersten Lichtexpositions-Niveau zu bestimmen.

5. Verfahren nach einem der Ansprüche 1 bis 4, **dadurch gekennzeichnet, dass** das Verfahren den weiteren Schritt umfasst:
Bestimmen der Gesamtmenge der mindestens einen Art von Molekülen mit Hilfe der Absorptionsmessung während der Oxidation von allen vorliegenden Molekülen durch eine sättigende Lichtexposition;
und **dadurch**, dass
der Redoxkinetik-Parameter aus der Zunahme an oxidierten Molekülen mit Bezug auf die Gesamtmenge der mindestens einen Art von Molekülen hergeleitet wird.

6. Verfahren nach Anspruch 5, **dadurch gekennzeichnet, dass** die Absorptionsmessung zu einem bestimmten Zeitpunkt nach dem Übergang vom ersten Lichtexpositions-Niveau zum zweiten Lichtexpositions-Niveau stattfindet, und der Redoxkinetik-Parameter die Menge von oxidierten Molekülen ist, die aus der Ab sorptionsmessung mit Bezug auf die Gesamtmenge der mindestens einen Art von Molekülen hergeleitet wird.

7. Verfahren zum Messen der Wirkung eines externen Faktors auf eine Nutzpflanze, umfassend die Schritte:
Überführen von mindestens einer Art von verschiedenen Arten von Molekülen, die auf der Donorseite des Elektronentransportsystems der Nutzpflanze liegen, in einen oxidierten Zustand, wobei der Vorgang des Überführens in den oxidierten Zustand nach einem ersten Zeitraum, nachdem der externe Faktor erscheint, stattfindet;
Messen der Absorption durch die oxidierten Moleküle in der Nutzpflanze bei einer Wellenlänge, die durch die oxidierten Moleküle bestimmt wird;
Ableiten von mindestens einem Redoxkinetik-Parameter der mindestens einen Art von Molekülen aus der Absorptionsmessung; und
Vergleichen des mindestens einen Redoxkinetik-Parameters mit mindestens einem Vergleichswert, um die Wirkung des externen Faktors zu bestimmen, wobei
der Vorgang des Überführens in den oxidierten Zustand stattfindet, indem die Lichtexposition der Nutzpflanze während eines ersten Lichtexpositions-Zeitraums von einem ersten Lichtexpositions-Niveau auf ein zweites Lichtexpositions-Niveau gesteigert wird;
und die Absorptionsmessung mindestens während des ersten Lichtexpositions-Zeitraums und danach stattfindet, und
der mindestens eine Redoxkinetik-Parameter die Änderung der Reduktion über der Zeit und/oder das Ausmaß der Reduktion der mindestens einen Art von Molekülen ist.

8. Verfahren nach Anspruch 7, **dadurch gekennzeichnet, dass** die Wirkung des externen Faktors durch Luftverschmutzung, Verunreinigung des Bodens oder die Anwendung eines Herbizids verursacht wird, wobei das Herbizid ein photosynthetisches Herbizid ist.

9. Verfahren nach Anspruch 7 oder 8, **dadurch gekennzeichnet, dass** der erste Lichtexpositions-Zeitraum zwischen einer und fünf Millisekunden beträgt und dass die Absorptionsmessung 30 bis 100 Millisekunden dauert.

10. Verfahren nach einem der Ansprüche 1 bis 9, **dadurch gekennzeichnet, dass** der mindestens eine Vergleichswert ein theoretischer erwarteter Wert ist.

11. Verfahren nach einem der Ansprüche 1 bis 9, **dadurch gekennzeichnet, dass** der mindestens eine Vergleichswert ein empirisch bestimmter erwarteter Wert ist.

12. Verfahren nach einem der Ansprüche 1 bis 9, **dadurch gekennzeichnet, dass** der mindestens eine Vergleichswert ein Wert ist, der in der Nutzpflanze gemessen wird, bevor der externe Faktor erscheint.

13. Verfahren nach einem der Ansprüche 1 bis 9, **dadurch gekennzeichnet, dass** der mindestens eine Vergleichswert ein Wert ist, der zu einem anderen Zeitpunkt gemessen wird, nachdem der externe Faktor erscheint.

14. Verfahren nach einem der vorangehenden Ansprüche, **dadurch gekennzeichnet, dass** der erste Zeitraum 24 Stunden beträgt.

15. Messapparatur zum Messen der Wirkung eines externen Faktors auf eine bestimmte Nutzpflanze, wobei die Messapparatur bereitgestellt wird mit:
Oxidationsmitteln, die so entworfen sind, dass sie mindestens eine Art von verschiedenen Arten von Molekülen, die auf der Donorseite des Elektronentransportsystems der Nutzpflanze liegen, in einen oxidierten Zustand überführen;
Mitteln der Absorptionsmessung, die so angeordnet sind, dass sie die Absorption durch die oxidierten Moleküle in der Nutzpflanze bei einer Wellenlänge messen, die durch die oxidierten Moleküle bestimmt wird,
wobei die Oxidationsmittel weiterhin so angeordnet sind, dass sie die Moleküle der mindestens einen Art nach einem ersten Zeitraum, nachdem der externe Faktor erscheint, in einen oxidierten Zustand überführen, und dass die Apparatur weiterhin Mittel zur Verarbeitung umfasst, die so angeordnet sind, dass sie aus der Absorptionsmessung mindestens einen Redoxkinetik-Parameter der mindestens einen Art von Molekülen ableiten und den mindestens einen Redoxkinetik-Parameter mit mindestens einem Vergleichswert vergleichen, um die Wirkung des externen Faktors zu bestimmen,
wobei die Oxidationsmittel so angeordnet sind, dass sie die mindestens eine Art von verschiedenen Arten von Molekülen, die auf der Donorseite des Elektronentransportsystems der Nutzpflanze liegen, in einen oxidierten Zustand überführen, indem eine Lichtexposition der Nutzpflanze von einem ersten Lichtexpositions-Niveau zu einem zweiten Lichtexpositions-Niveau gesteigert wird,
die Mittel der Absorptionsmessung so angeordnet sind, dass sie die Absorption mindestens während der Lichtexposition mit dem zweiten Lichtexpositions-Niveau messen, und
die Mittel der Verarbeitung so angeordnet sind, dass sie den mindestens einen Redoxkinetik-Parameter bestimmen, wobei der mindestens eine Redoxkinetik-Parameter die Oxidationsänderung über der Zeit der mindestens einen Art von Molekülen ist.

## Revendications

1. Méthode de mesure de l'effet d'un facteur externe sur un végétal de culture, comprenant les étapes de
passage à un état oxydé d'au moins une sorte d'un ensemble de sortes de molécules situées du côté donneur du système de transport d'électrons du végétal de culture, la réaction de passage à l'état oxydé intervenant une première période de temps après l'intervention du facteur externe ;
mesure de l'absorption des molécules oxydées dans le végétal de culture à une longueur d'ondes déterminée par les molécules oxydées ;
déduction d'au moins un paramètre de la cinétique d'oxydoréduction d'au moins la sorte de molécules à partir de la mesure d'absorption ; et
comparaison d'au moins un paramètre de la cinétique d'oxydoréduction avec au moins une valeur de comparaison, dans le but de déterminer l'effet du facteur externe, dans laquelle la réaction de passage à l'état oxydé se produit par une augmentation de l'exposition du végétal de culture à la lumière depuis un premier niveau d'exposition à la lumière à un deuxième niveau d'exposition à la lumière ;
la mesure d'absorption ayant lieu au moins pendant l'exposition à la lumière avec le deuxième niveau d'exposition à la lumière, et
au moins un paramètre de la cinétique d'oxydoréduction étant le changement d'oxydation au cours du temps d'au moins la sorte de molécules.

2. Méthode selon la revendication 1, **caractérisée en ce que** l'effet du facteur externe résulte de la pollution de l'air, de la contamination du sol ou de l'application d'un herbicide, l'herbicide étant choisi dans le groupe consistant en un herbicide qui interfère avec le métabolisme du végétal de culture, un herbicide qui interfère dans le rapport normal entre le transport photosynthétique d'électrons et le métabolisme du végétal de culture, ou un herbicide qui a un effet direct sur la photosynthèse.

3. Méthode selon la revendication 1 ou 2, **caractérisée en ce que** l'exposition à la lumière au deuxième niveau d'exposition à la lumière se produit pendant 2 à 10 minutes, par exemple 4 minutes.

4. Méthode selon l'une des revendications 1 à 3, **caractérisée en ce que** la mesure de l'absorption est également effectuée en partie au premier niveau d'exposition à la lumière, dans le but de déterminer un niveau de base de l'absorption au premier niveau d'exposition à la lumière.

5. Méthode selon l'une des revendications 1 à 4, **caractérisée en ce que** la méthode comprend une étape supplémentaire de
détermination de la quantité totale d'au moins la sorte de molécules par une mesure de l'absorption pendant l'oxydation de toutes les molécules présentes par une exposition saturante de lumière;
et **en ce que** le paramètre de la cinétique d'oxydoréduction est déduit de l'augmentation de molécules oxydées en fonction de la quantité totale d'au moins la sorte de molécules.

6. Méthode selon la revendication 5, **caractérisée en ce que** la mesure d'absorption est effectuée à un moment particulier après la transition depuis le premier niveau d'exposition à la lumière au deuxième niveau d'exposition à la lumière, et le paramètre de la cinétique d'oxydoréduction est la quantité de molécules oxydées, déduite de la mesure d'absorption, en fonction de la quantité totale d'au moins la sorte de molécules.

7. Méthode de mesure de l'effet d'un facteur externe sur un végétal de culture, comprenant les étapes de
passage à un état oxydé d'au moins une sorte d'un ensemble de sortes de molécules situées du côté donneur du système de transport d'électrons du végétal de culture, la réaction de passage à l'état oxydé intervenant une première période de temps après l'intervention du facteur externe ;
mesure de l'absorption des molécules oxydées dans le végétal de culture à une longueur d'ondes déterminée par les molécules oxydées ;
déduction d'au moins un paramètre de la cinétique d'oxydoréduction d'au moins la sorte de molécules à partir de la mesure d'absorption ; et
comparaison d'au moins un paramètre de la cinétique d'oxydoréduction avec au moins une valeur de comparaison, dans le but de déterminer l'effet du facteur externe, dans laquelle la réaction de passage à l'état oxydé se produit par une augmentation de l'exposition du végétal de culture à la lumière pendant une première période d'exposition à la lumière depuis un premier niveau d'exposition à la lumière à un deuxième niveau d'exposition à la lumière et la mesure d'absorption a lieu au moins pendant et après la première période d'exposition à la lumière, et au moins un paramètre de la cinétique d'oxydoréduction est le changement de réduction au cours du temps et / ou du degré de réduction d'au moins la sorte des molécules.

8. Méthode selon la revendication 7, **caractérisée en ce que** l'effet du facteur externe résulte de la pollution de l'air, de la contamination du sol ou de l'application d'un herbicide, l'herbicide étant un herbicide photosynthétique.

9. Méthode selon la revendication 7 ou 8, **caractérisée en ce que** la première période d'exposition à la lumière dure entre 1 et 5 millisecondes et **en ce que** la mesure d'absorption a lieu pendant 30 à 100 millisecondes.

10. Méthode selon l'une des revendications 1 à 9, **caractérisée en ce que** au moins une valeur de comparaison est une valeur attendue théorique.

11. Méthode selon l'une des revendications 1 à 9, **caractérisée en ce que** au moins une valeur de comparaison est une valeur attendue déterminée empiriquement.

12. Méthode selon l'une des revendications 1 à 9, **caractérisée en ce que** au moins une valeur de comparaison est une valeur mesurée dans le végétal de culture avant l'intervention du facteur externe.

13. Méthode selon l'une des revendication 1 à 9, **caractérisée en ce que** au moins une valeur de comparaison est une valeur mesurée à un autre moment après l'intervention du facteur externe.

14. Méthode selon l'une des revendications précédentes, **caractérisée en ce que** la première période de temps est de 24 heures.

15. Appareil de mesure pour mesurer l'effet d'un facteur externe sur un végétal de culture particulier, l'appareil de mesure étant équipé :
de moyens d'oxydation dont le but est de porter au moins une sorte d'un ensemble de sortes de molécules situées du côté donneur du système de transport d'électrons du végétal de culture à un état oxydé ;
de moyens de mesure d'absorption qui permettent de mesurer l'absorption des molécules oxydées dans le végétal de culture à une longueur d'onde déterminée par les molécules oxydées,
dans lequel les moyens d'oxydation permettent de plus le passage des molécules d'au moins une sorte à un état oxydé après une première période de temps après l'intervention du facteur externe, et l'appareil inclut également des moyens de traitement qui permettent de déduire de la mesure d'absorption au moins un paramètre de la cinétique d'oxydoréduction d'au moins la sorte de molécules et de comparer au moins le paramètre de la cinétique d'oxydoréduction avec au moins une valeur de comparaison, dans le but de déterminer l'effet du facteur externe,
dans lequel les moyens d'oxydation permettent le passage à un état oxydé d'au moins la sorte d'un ensemble de sortes de molécules situées du côté donneur du système de transport d'électrons du végétal de culture, par une augmentation de l'exposition du végétal de culture à la lumière depuis un premier niveau d'exposition à la lumière à un deuxième niveau d'exposition à la lumière,
les moyens de mesure de l'absorption permettent de mesurer l'absorption au moins pendant l'exposition à la lumière au deuxième niveau d'exposition à la lumière, et
les moyens de traitement permettent de déterminer au moins un paramètre de la cinétique d'oxydoréduction, parmi lesquels au moins un paramètre de la cinétique d'oxydoréduction est le changement d'oxydation au cours du temps d'au moins la sorte de molécules.
